# EUROPÄISCHE PATENTSCHRIFT

(11) **EP 3 505 455 B1**
(45) Veröffentlichungstag und Bekanntmachung des Hinweises auf die Patenterteilung: **15.07.2020**
(21) Anmeldenummer: 18000834.4
(22) Anmeldetag: 26.10.2018
(51) Int. Cl.: B65B 13/18, B65B 27/10, A21C 13/00

(54) **WICKELEINRICHTUNG**
COILING DEVICE
ENROULEUR

(30) Priorität: 28.10.2017 DE 202017005638 U
(43) Veröffentlichungstag der Anmeldung: 03.07.2019
(73) Patentinhaber: Kabatec GmbH & Co. KG, 36151 Burghaun (DE)
(72) Erfinder: Schmelz, Steffen, 36419 Geisa ST Borsch (DE); Göbel, Andreas, 36132 Eiterfeld (DE); Sodies, Jörg, 36151 Burghaun (DE)
(74) Vertreter: Körner, Volkmar Horst

(56) Entgegenhaltungen:
- DE-U1- 29 718 961
- DE-U1-202008 004 087
- JP-A- H08 169 411

## Beschreibung

Die Erfindung betrifft ein Bündelgerät mit einer Wickeleinrichtung zum Umwickeln eines länglichen Bündelgutes mit einem Klebeband, mit einem drehbar gelagerten Wickelkopf, mit zwei federnd vorgespannten Schwenkbacken des Wickelkopfes zur Führung des Bündelgutes in das Zentrum des Wickelkopfes und zur Abstützung des Bündelgutes beim Umwickeln, wobei die Schwenkbacken als in einer Öffnung des Wickelkopfes zur Einführung des Bündelgutes entgegenstehenden Andrückbacken ausgebildet sind.

Eine solche Wickeleinrichtung ist beispielsweise aus der DE 20 2015 001 990 U1 bekannt. Bei dieser Wickeleinrichtung wird das Bündelgut von Hand bis zu den Schwenkbacken geführt und von einer Gegenbacke abgestützt. Damit wird das Bündelgut innerhalb des Wickelkopfes zuverlässig gehalten.

Weiterhin offenbart die DE 20 2008 004 087 U1 eine solche Wickeleinrichtung. Bei dieser Vorrichtung wird ein Klebeband von einer Greifeinrichtung vor dem Wickelkopf gehalten, bis das Bündelgut Kontakt mit diesem hat und anschließend auf eine vorgesehene Länge geschnitten. Anschließend hängt das Klebeband herab und kann von dem Bündelgut in den Wickelkopf gedrückt werden. Dabei gleitet das Bündelgut mit dem Streifen des Klebebandes über die Schwenkbacken, bis es gegen eine im Zentrum des Wickelkopfes angeordnete Gegenbacke gelangt.

Nachteilig bei den bekannten Wickeleinrichtungen ist, dass das Bündelgut zwischen den Schwenkbacken in den Wickelkopf eingeführt wird und die Schwenkbacken dabei von dem Bündelgut weggeschwenkt werden. Je nach Gestaltung der Schwenkbacken sind die bekannten Wickeleinrichtungen daher auf die Umwicklung eines nur sehr engen Durchmesserbereichs des Bündelgutes begrenzt.

Der Erfindung liegt das Problem zugrunde, eine Wickeleinrichtung der eingangs genannten Art so weiter zu bilden, dass sie die Umwicklung eines besonders großen Durchmesserbereichs des Bündelgutes ermöglicht.

Dieses Problem wird erfindungsgemäß dadurch gelöst, dass die Andrückbacken aneinander gelagert sind und dass die Andrückbacken über eine Hebelanordnung an dem Wickelkopf gelagert sind.

Durch diese Gestaltung werden die Andrückbacken bei der Bewegung des Bündelgutes in den Bündelkopf hinein niedergedrückt. Durch die Lagerung der Andrückbacken aneinander werden diese beim Eindrücken des Bündelguts in die Wickeleinrichtung auf das Bündelgut zu geschwenkt. Da die Andrückbacken aneinander gelagert sind, wird ein Auseinanderbewegen der Andrückbacken bei der Einführung des Bündelgutes in den Bündelkopf verhindert. Dank der Erfindung stellen die Andrückbacken dem Bündelgut in jeder Position einen Widerstand entgegen und führen es unabhängig von dessen Durchmesser innerhalb des Wickelkopfes. Die Wickeleinrichtung ermöglicht hierdurch eine besonders genaue Führung des Bündelgutes unabhängig von dessen Durchmesser. Dank der Erfindung ist die erfindungsgemäße Wickeleinrichtung hierdurch für die Umwicklung eines besonders großen Durchmesserbereichs des Bündelgutes geeignet.

Ein seitliches Umgreifen des Bündelgutes durch die Andrückbacken lässt sich gemäß einer anderen vorteilhaften Weiterbildung der Erfindung einfach sicherstellen, wenn der Schwenkwinkel der Andrückbacken von der Position des Bündelgutes innerhalb des Wickelkopfes und dem Durchmesser des Bündelgutes gesteuert ist. Durch diese Gestaltung lässt sich sicherstellen, dass die Andrückbacken in Grundstellung zur Aufnahme des Bündelgutes mit dem größtmöglichen Durchmesser geöffnet sind und in einer im Zentrum des Wickelkopfes befindlichen Wickelstellung das Bündelgut seitlich umgreifen, so dass auch das Bündelgut mit seinem kleinstmöglichen Durchmesser gehalten ist. Weiterhin wird das Bündelgut innerhalb des Wickelkopfes besonders genau in seiner vorgesehenen Lage gehalten.

Zur weiteren Verbesserung der Halterung des Bündelgutes trägt es gemäß einer anderen vorteilhaften Weiterbildung der Erfindung bei, wenn Andrückbacken von Andrückfedern in einer im Zentrum des Wickelkopfes befindlichen Wickelstellung gegeneinander vorgespannt sind.

Der bauliche Aufwand für die Steuerung des Schwenkwinkels lässt sich gemäß einer anderen vorteilhaften Weiterbildung der Erfindung besonders gering halten, wenn die Andrückbacken mit einer Hebelanordnung verbunden sind und wenn die Hebelanordnung zur Veränderung der Vorspannung der Andrückfedern ausgebildet ist.

Die Veränderung der Vorspannung der Andrückfedern gestaltet sich gemäß einer anderen vorteilhaften Weiterbildung der Erfindung besonders einfach, wenn die Hebelanordnung zwei jeweils eine Andrückbacke lagernden Heckhebel und zwei die Heckhebel lagernde Fronthebel hat.

Eine festgelegte Grundstellung der Andrückbacken lässt sich gemäß einer anderen vorteilhaften Weiterbildung der Erfindung einfach erreichen, wenn die Fronthebel und die Heckhebel über Hebelfedern gegeneinander vorgespannt sind.

Eine Drehung der Andrückbacken um das Bündelgut lässt sich gemäß einer anderen vorteilhaften Weiterbildung der Erfindung einfach erreichen, wenn der Wickelkopf einen Grundkörper mit der Öffnung zur Einführung des Bündelgutes hat und wenn die Hebelanordnung an dem Grundkörper gelagert ist. Durch diese Gestaltung wird das Klebeband bei der Drehung des Wickelkopfes und damit des Grundkörpers zuverlässig um das Bündelgut herumgeführt.

Der Wickelkopf lässt sich gemäß einer anderen vorteilhaften Weiterbildung der Erfindung besonders kompakt gestalten, wenn zwei Führungselemente zur Führung des Bündelgutes außerhalb des Wickelkopfes gelagert sind. Die Führungselemente sind daher unabhängig von dem Wickelkopf gelagert. Durch diese Gestaltung drehen sich die Führungselemente nicht mit dem Wickelkopf mit.

Das Bündelgut lässt sich gemäß einer anderen vorteilhaften Weiterbildung der Erfindung beim Einführen in die Wickeleinrichtung frühzeitig mit dem Klebeband verbinden, wenn die Führungselemente in Einführrichtung des Bündelgutes gesehen vor der Öffnung im Wickelkopf angeordnet sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Vorderansicht eines Bündelgerätes mit einer Wickeleinrichtung,
- Fig.2: vergrößert eine Rückansicht eines Teilbereichs des Bündelgerätes aus Figur 1,
- Fig.3: stark vergrößert einen Wickelkopf der Wickeleinrichtung aus Figur 1 beim Einführen eines durchmesserkleinen Bündelgutes,
- Fig.4: den Wickelkopf aus Figur 3 mit vollständig eingeführtem durchmesserkleinen Bündelgut
- Fig.5: stark vergrößert den Wickelkopf der Wickeleinrichtung aus Figur 1 beim Einführen eines durchmessergroßen Bündelgutes,
- Fig.6: den Wickelkopf aus Figur 5 mit vollständig eingeführtem durchmessergroßen Bündelgut.

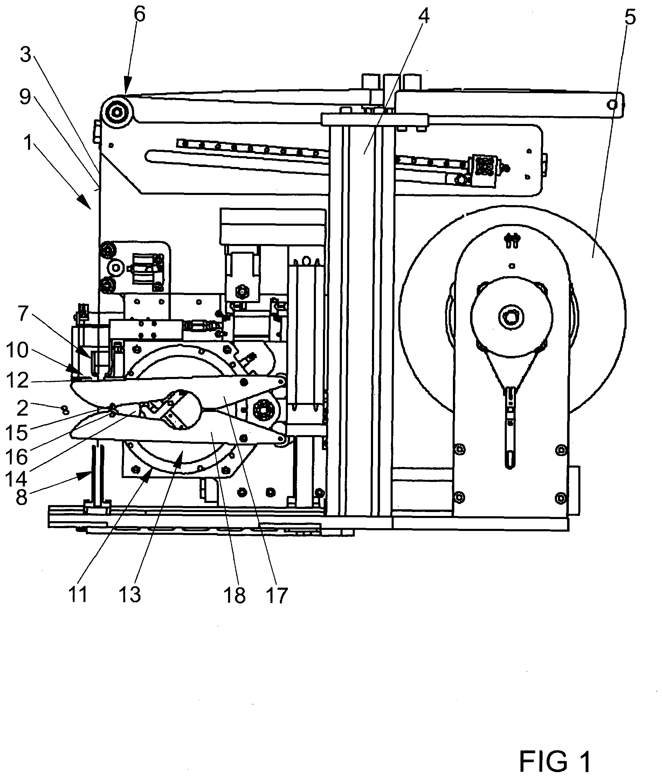

Figur 1 zeigt ein Bündelgerät 1 zum Umwickeln eines länglichen, senkrecht zur Zeichenebene angeordneten Bündelgutes 2 mit einem Klebeband 3. Das Bündelgut 2 ist hier senkrecht zur Zeichenebene ausgerichtet und im Querschnitt dargestellt. Das Bündelgerät 1 hat einen Träger 4, über den das Klebeband 3 von einer Vorratsrolle 5 über Rollenanordnung mit einem Bandvorabzug 6 mit einer nur in einem Drehsinne drehbaren Freilaufrolle über eine Klemmeinrichtung 7 zu einer Greifeinrichtung 8 geführt ist. Mit der Klebeseite 9 des Klebebandes 3 Kontakt aufweisende Rollen der Rollenanordnung 6 sind als nicht näher dargestellte Stachelrollen ausgebildet. Das freie Ende des Klebebandes 3 ist in der Greifeinrichtung 8 gehalten. Weiterhin hat die Vorrichtung 1 eine Schneideinrichtung 10 zur Durchtrennung des Klebebandes 3. Das Klebeband 3 ist vor einer Wickeleinrichtung 11 im Inneren der Vorrichtung 1 gespannt.

Das Bündelgerät 1 befindet sich in einer Grundstellung in der die Umwicklung des Klebebandes 3 durch eine manuelle Bewegung des Bündelgutes 2 gegen die Klebeseite 9 des Klebebandes 3 gestartet werden kann. Von dem Bündelgut 2 aus gesehen befindet sich unmittelbar hinter dem Klebeband 3 ein nicht näher dargestellter Sensor. Sobald das Bündelgut 2 das Klebeband 3 in den Erfassungsbereich des Sensors drückt, wird die Schneidvorrichtung 10 ausgelöst und ein Schneidwerkzeug 12 durchtrennt das Klebeband 3 mit einem Abstand von 2 bis 3 mm vor der Klemmeinrichtung 7.

Die Wickeleinrichtung 11 hat einen Wickelkopf 13 mit einer Öffnung 14 zum Einführen des Bündelgutes 2 und zwei gegeneinander vorgespannte Führungselemente 21, 22 zur Führung des Bündelgutes 2 vor dem Wickelkopf 13. Diese Führungselemente 15, 16 sind auf an dem Träger 4 schwenkbaren Armen 17, 18 angeordnet. Die Führungselemente 15, 16 führen das Bündelgut 2 mit dem Klebeband 3 zu dem Wickelkopf 13. Das Bündelgut 2 wird dabei mit dem von der Schneideinrichtung 10 abgelängten Klebeband 3 vorfixiert dem Wickelkopf 13 zugeführt.

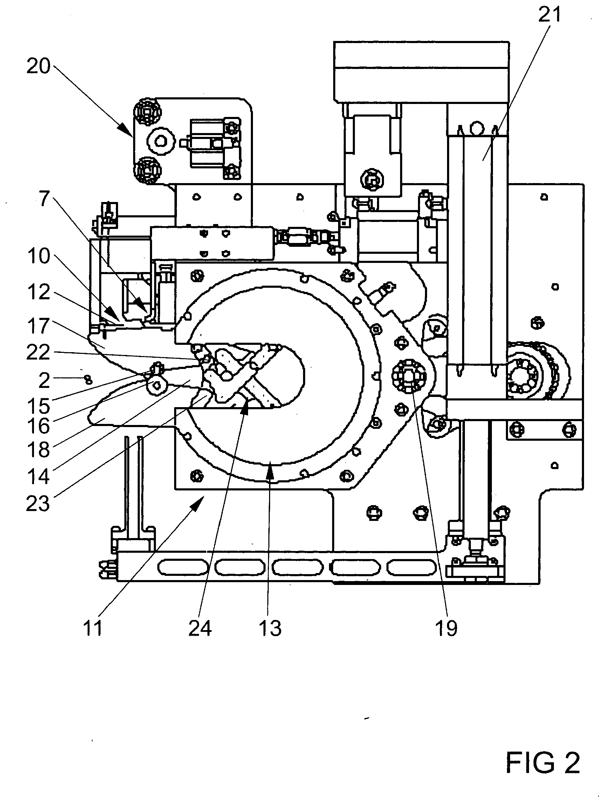

Figur 2 zeigt vergrößert einen Teilbereich des Bündelgerätes 1 in einer rückseitigen Ansicht. Hierbei ist zu erkennen, dass der Wickelkopf 13 der Wickeleinrichtung 11 über einen Antriebsmotor 19 antreibbar ist. Zur Vereinfachung der Zeichnung ist von dem Antriebsmotor 19 nur eine Antriebswelle dargestellt.

Die Wickeleinrichtung hat eine Bandbremse 20 mit einer elektronischen Bandlängenmessung. Die Führungselemente 15, 16 sind als Rollen ausgebildet. Der in Figur 1 dargestellte Bandvorabzug 6 hat eine Zugeinrichtung 21. In dem Wickelkopf 13 sind zwei Andrückbacken 22, 23 aneinander gelagert. Die Andrückbacken 22, 23 sind über eine Hebelanordnung 24 an dem Wickelkopf 13 gelagert.

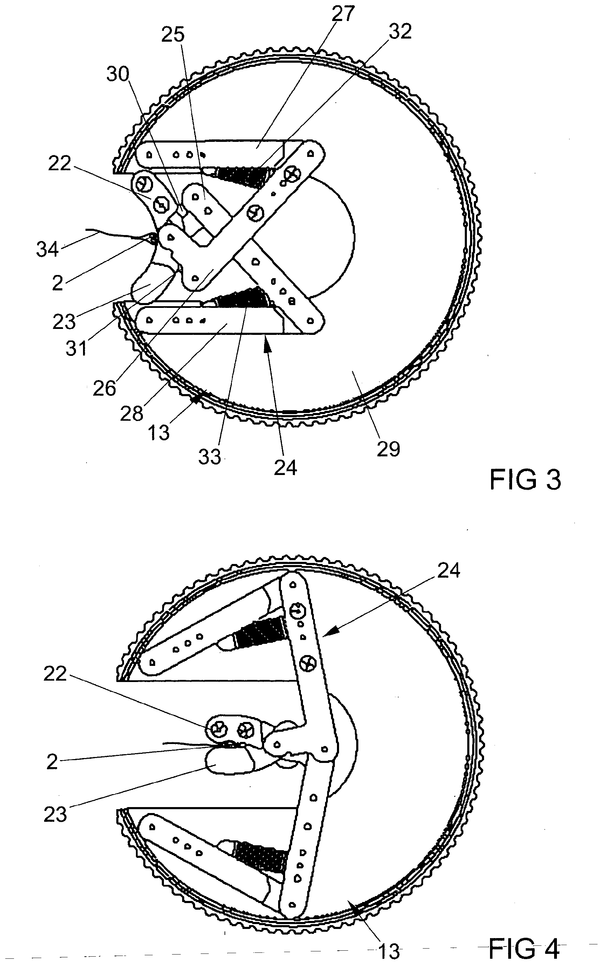

Der Wickelkopf 13 mit den Andrückbacken 22, 23 und der Hebelanordnung 24 ist in Figur 3 vergrößert dargestellt. Die Hebelanordnung 24 hat zwei jeweils eine der Andrückbacken 22, 23 lagernde Heckhebel 25, 26 und zwei die Heckhebel 25, 26 lagernde Fronthebel 27, 28. Die Fronthebel 27, 28 sind schwenkbar an einem Grundkörper 29 des Wickelkopfes 13 gelagert. Die Andrückbacken 22, 23 sind über Andrückfedern 30, 31 gegenüber den Heckhebeln 25, 26 vorgespannt. Die Hebelanordnung 24 weist Hebelfedern 32, 33 zur Vorspannung der Heckhebel 25, 26 gegen jeweils einen Fronthebel 27, 28 auf.

Weiterhin zeigt Figur 3, dass das Bündelgut 2 durchmesserklein ist und mit einem Klebebandstreifen 34 vorfixiert ist. Die Andrückbacken 22, 23 sind auf einen größtmöglichen Aufnahmewinkel aufgeschwenkt. Das Bündelgut 2 ist an den aneinandergrenzenden Bereich der Andrückbacken 22, 23 gedrückt.

Drückt man das durchmesserkleine Bündelgut 2 ausgehend von der Stellung aus Figur 3 weiter in den Bündelkopf, werden die Andrückbacken 22, 23 in den Bündelkopf 13 hineingedrückt und schwenken sich um das Bündelgut 2. Diese Stellung ist in Figur 4 dargestellt. Bei einer anschließenden Verdrehung des Wickelkopfes 13 mit den Andrückbacken 22, 23 und feststehenden Bündelgut 2, wird der Klebebandstreifen 34 um das Bündelgut 2 geführt.

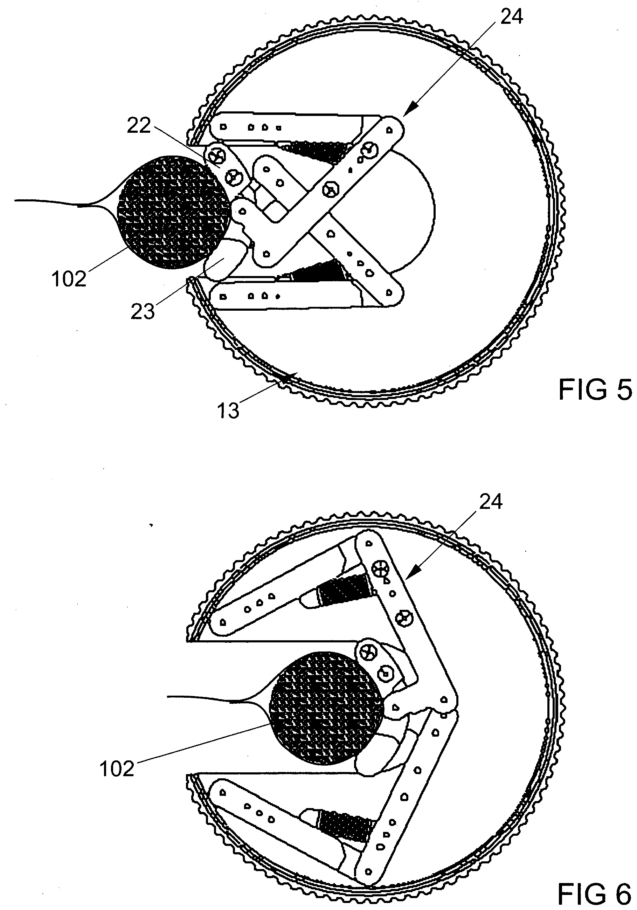

Die Figur 5 und 6 zeigen die Einführung eines durchmessergroßen Bündelgutes 102 in den Wickelkopf 13. Ein Vergleich mit den Figuren 3 und 4 zeigt, dass die Andrückbacken 22, 23 ebenfalls in den Wickelkopf 13 hineingedrückt werden und sich in diesem Fall nur geringfügig an das durchmessergroße Bündelgut 102 andrücken können.

## Patentansprüche

1. Bündelgerät (1) mit einer Wickeleinrichtung (11) zum Umwickeln eines länglichen Bündelgutes (2, 102) mit einem Klebeband (3), mit einem drehbar gelagerten Wickelkopf (13), mit zwei federnd vorgespannten Schwenkbacken des Wickelkopfes (13) zur Führung des Bündelgutes (2, 102) in das Zentrum des Wickelkopfes (13) und zur Abstützung des Bündelgutes (2, 102) beim Umwickeln, wobei die Schwenkbacken als in einer Öffnung (14) des Wickelkopfes (113) zur Einführung des Bündelgutes (2, 102) entgegenstehenden Andrückbacken (22, 23) ausgebildet sind, **dadurch gekennzeichnet, dass** die Andrückbacken (22, 23) aneinander gelagert sind und dass die Andrückbacken (22, 23) über eine Hebelanordnung (24) an dem Wickelkopf (13) gelagert sind.

2. Bündelgerät mit einer Wickeleinrichtung nach Anspruch 1, **dadurch gekennzeichnet, dass** der Schwenkwinkel der Andrückbacken (22, 23) von der Position des Bündelgutes (2, 102) innerhalb des Wickelkopfes (13) und dem Durchmesser des Bündelgutes (2, 102) gesteuert ist.

3. Bündelgerät mit einer Wickeleinrichtung nach Anspruch 1 oder 2, **dadurch gekennzeichnet, dass** Andrückbacken (22, 23) von Andrückfedern (30, 31) in einer im Zentrum des Wickelkopfes (13) befindlichen Wickelstellung gegeneinander vorgespannt sind.

4. Bündelgerät mit einer Wickeleinrichtung nach zumindest einem der Ansprüche 1 bis 3, **dadurch gekennzeichnet, dass** die Andrückbacken (22, 23) mit einer Hebelanordnung (24) verbunden sind und dass die Hebelanordnung (24) zur Veränderung der Vorspannung der Andrückfedern (30, 31) ausgebildet ist.

5. Bündelgerät mit einer Wickeleinrichtung nach Anspruch 4, **dadurch gekennzeichnet, dass** die Hebelanordnung (24) zwei jeweils eine Andrückbacke (22, 23) lagernden Heckhebel (25, 26) und zwei die Heckhebel (25, 26) lagernde Fronthebel (27, 28) hat.

6. Bündelgerät mit einer Wickeleinrichtung nach Anspruch 5, **dadurch gekennzeichnet, dass** die Fronthebel (27, 28) und die Heckhebel (25, 26) über Hebelfedern (32, 33) gegeneinander vorgespannt sind.

7. Bündelgerät mit einer Wickeleinrichtung nach zumindest einem der Ansprüche 1 bis 6, **dadurch gekennzeichnet, dass** der Wickelkopf (13) einen Grundkörper (29) mit der Öffnung (14) zur Einführung des Bündelgutes (2, 102) hat und dass die Hebelanordnung (24) an dem Grundkörper (29) gelagert ist.

8. Bündelgerät mit einer Wickeleinrichtung nach zumindest einem der Ansprüche 1 bis 7, **dadurch gekennzeichnet, dass** zwei Führungselemente (15, 16) zur Führung des Bündelgutes (2, 102) außerhalb des Wickelkopfes (13) gelagert sind.

9. Bündelgerät mit einer Wickeleinrichtung nach Anspruch 8, **dadurch gekennzeichnet, dass** die Führungselemente (15, 16) in Einführrichtung des Bündelgutes (2, 102) gesehen vor der Öffnung (14) im Wickelkopf (13) angeordnet sind.

## Claims

1. A bundling device (1) with a winding device (11) for wrapping an elongated bundled material (2, 102) with an adhesive tape (3), with a rotatably mounted winding head (13), with two resiliently pre-tensioned pivoting jaws of the winding head (13) for guiding the bundled material (2, 102) into the center of the winding head (13) and for supporting the bundled material (2, 102) during the wrapping, wherein the pivoting jaws are designed as opposing pressure-exerting jaws (22, 23) in an opening (14) of the winding head (113) for introducing the bundled material (2, 102), **characterized in that** the pressure-exerting jaws (22, 23) are mounted on one another and that the pressure-exerting jaws (22, 23) are mounted via a lever arrangement (24) on the winding head (13).

2. The bundling device with a winding device according to Claim 1, **characterized in that** the pivot angle of the pressure-exerting jaws (22, 23) is controlled by the position of the bundled material (2, 102) inside the winding head (13) and the diameter of the bundled material (2, 102).

3. The bundling device with a winding device according to Claim 1 or 2, **characterized in that** pressure-exerting jaws (22, 23) are pre-tensioned by pressure springs (30, 31) against one another in a winding position located in the center of the winding head (13).

4. The bundling device with a winding device according to at least one of Claims 1 to 3, **characterized in that** the pressure-exerting jaws (22, 23) are connected to a lever arrangement (24) and that the lever arrangement (24) is designed for changing the pretension of the pressure springs (30, 31).

5. The bundling device with a winding device according to Claim 4, **characterized in that** the lever arrangement (24) has two rear levers (25, 26) in each case supporting a pressure-exerting jaw (22, 23) and two front levers (27, 28) supporting the rear levers (25, 26).

6. The bundling device with a winding device according to Claim 5, **characterized in that** the front levers (27, 28) and the rear levers (25, 26) are pre-tensioned against one another via lever springs (32, 33).

7. The bundling device with a winding device according to at least one of Claims 1 to 6, **characterized in that** the winding head (13) has a base body (29) with the opening (14) for introducing the bundled material (2, 102) and that the lever arrangement (24) is mounted on the base body (29).

8. The bundling device with a winding device according to at least one of Claims 1 to 7, **characterized in that** two guide elements (15, 16) for guiding the bundled material (2, 102) are mounted outside of the winding head (13).

9. The bundling device with a winding device according to Claim 8, **characterized in that** the guide elements (15, 16), when viewed in the introduction direction of the bundled material (2, 102), are arranged in front of the opening (14) in the winding head (13).

## Revendications

1. Appareil de bottelage (1) avec un dispositif d'enroulement (11) pour l'enroulement d'un produit à botteler allongé (2, 102) avec une bande adhésive (3), avec une tête d'enroulement (13) logée de manière rotative, avec deux mâchoires pivotantes, précontraintes à l'aide d'un ressort, de la tête d'enroulement (13), pour le guidage du produit à botteler (2, 102) vers le centre de la tête d'enroulement (13) et pour l'appui du produit à botteler (2, 102) lors de l'enroulement, dans lequel les mâchoires pivotantes sont conçues comme des mâchoires de compression (22, 23) opposées dans une ouverture (14) de la tête d'enroulement (113) pour l'introduction du produit à botteler (2, 102), **caractérisé en ce que** les mâchoires de compression (22, 23) sont montées l'une contre l'autre et **en ce que** les mâchoires de compression (22, 23) sont montées sur la tête d'enroulement (13) par l'intermédiaire d'un dispositif à leviers (24).

2. Appareil de bottelage avec un dispositif d'enroulement selon la revendication 1, **caractérisé en ce que** l'angle de pivotement des mâchoires de compression (22, 23) est contrôlé par la position du produit à botteler (2, 102) à l'intérieur de la tête d'enroulement (13) et du diamètre du produit à botteler (2, 102).

3. Appareil de bottelage avec un dispositif d'enroulement selon la revendication 1 ou 2, **caractérisé en ce que** les mâchoires de compression (22, 23) sont précontraintes par des ressorts de compression (30, 31) dans une position d'enroulement se trouvant au centre de la tête d'enroulement (13).

4. Appareil de bottelage avec un dispositif d'enroulement selon au moins l'une des revendications 1 à 3, **caractérisé en ce que** les mâchoires de compression (22, 23) sont reliées avec un dispositif à leviers (24) et **en ce que** le dispositif à levier (24) est conçu pour la modification de la précontrainte des ressorts de compression (30, 31).

5. Appareil de bottelage avec un dispositif d'enroulement selon la revendication 4, **caractérisé en ce que** le dispositif à leviers (24) comprend deux leviers arrière (25, 26) logeant chacun une mâchoire de compression (22, 23) et deux leviers avant (27, 28) logeant les leviers arrière (25, 26).

6. Appareil de bottelage avec un dispositif d'enroulement selon la revendication 5, **caractérisé en ce que** les leviers avant (27, 28) et les leviers arrière (25, 26) sont précontraints les uns contre les autres par l'intermédiaire de ressorts de leviers (32, 33).

7. Appareil de bottelage avec un dispositif d'enroulement selon au moins l'une des revendications 1 à 6, **caractérisé en ce que** la tête d'enroulement (13) comprend un corps de base (29) avec l'ouverture (14) pour l'introduction du produit à botteler (2, 102) et **en ce que** le dispositif à leviers (24) est logé au niveau du corps de base (29).

8. Appareil de bottelage avec un dispositif d'enroulement selon au moins l'une des revendications 1 à 7, **caractérisé en ce que** deux éléments de guidage (15, 16) pour le guidage du produit à botteler (2, 102) sont logés à l'extérieur de la tête d'enroulement (13).

9. Appareil de bottelage avec un dispositif d'enroulement selon la revendication 8, **caractérisé en ce que** les éléments de guidage (15, 16) sont disposés, vus dans la direction d'introduction du produit à botteler (2, 102), avant l'ouverture (14) dans la tête d'enroulement (13).
